# EUROPÄISCHE PATENTSCHRIFT

(11) **EP 0 330 079 B1**
(45) Veröffentlichungstag und Bekanntmachung des Hinweises auf die Patenterteilung: **04.08.1993**
(21) Anmeldenummer: 89102712.0
(22) Anmeldetag: 17.02.1989
(51) Int. Cl.: A01G 5/04

(54) **Kernkörper für Schmuck-, Pflanzen-, Trauergebinde od. dgl.**
Core for decorative, plant, funeral or the like wreaths
Noyau pour couronne de décoration, de plantes de deuil ou analogue

(30) Priorität: 20.02.1988 EP 88730039
(43) Veröffentlichungstag der Anmeldung: 30.08.1989
(73) Patentinhaber: Edm. Romberg & Sohn (GmbH & Co.) KG, D-25479 Ellerau (DE)
(72) Erfinder: Schilling, Frank, D-2081 Alveslohe (DE)
(74) Vertreter: Patentanwälte Wenzel & Kalkoff

(56) Entgegenhaltungen:
- FR-A- 2 394 993

## Beschreibung

Die Erfindung betrifft einen Kernkörper im Formeines Ringes für Schmuck-, Pflanzen-, Trauergebinde od.dgl., der im Verhältnis zur Form und Größe des Kernkörpers kurzstückige Segmentkörper aufweist, die an in Querschnitten des Kernkörpers liegenden Stirnseiten aneinander gefügt sind. Ein solcher Kernkörper bildet den Basis- oder Gebindekörper für Kränze, Römer, Blumenarrangements, Grabgestecke, Grabauflagen, Dekorationsarrangements od.dgl., Siehe FR-A- 2394993.

Es sind aus Modulelementen zusammengesetzte Ring-Kernkörper bekannt (FR-A 2-394 993). Die Stirnseiten der Modulelemente weisen Zahnprofile auf, wobei Zähne eines Elements formschlüssig in entsprechende Zahnlücken eines benachbarten Elements eingreifen. Die Ausbildung der Zähne erfordert ein massives Modulelement aus einem relativ festen oder harten Material, das zum leichten Einstecken von Drähten od.dgl. ungeeignet ist. Zähne und Lücken müssen in Anpassung aufeinander maßgenau gefertigt sein. Die maßgenaue Einzelteilfertigung der Modulelemente steht einer an sich gewünschten wirtschaftlichen Massenproduktion entgegen. Ein anderer bekannter Kernkörper ist in Form eines Kranzkernes aus zwei mit ihren Enden gegeneinander weisenden, halbringförmigen Teilen gebildet, die eine außenliegende Nut aufweisen, in die ein in sich geschlossener Armierungsring eingelegt ist (DE-B- 1 298 770). Die beiden vorgeformten halbringförmigen Teile mit Außennut und der Armierungsring sind für jeden Kranzdurchmesser speziell aufeinanderangepaßt herzustellen und zur Verfügung zu halten. Die Bauteile sind sperrig und damit unhandlich. Die Anbringung der Außennut sowie ggf. von Zapfen und Ausnehmungen an den Enden der Halbringteile erfordern aufwendige Fertigungsmaßnahmen. Auch muß der Kranz aus einem relativ festen, insbesondere zur Ausbildung von Zapfen mit speziellen Werkzeug bearbeitbaren Material bestehen. Ein noch anderer Trauerkranz umfaßt eine ringförmige Trägerplatte, auf die ringförmige Teilabschnitte des Kranzes als unterschiedlich gestaltete Schmuckelemente aufgesetzt und mit ihren Stirnseiten aneinandergesetzt sind (FR-A- 728 494). Eine an der Trägerplatte festgeschraubte Stoßlasche dient der Befestigung der Schmuckelemente und deckt die Fuge zwischen benachbarten Schmuckelementen ab. Die Herstellung eines solchen Kranzes ist arbeitsaufwendig und erfordert eine Einzelteilanfertigung von Hand. Schließlich sind einstückig geformte oder hergestellte Kranzkerne bekannt. Ein solcher bekannter Kranz umfaßt einen aus Pappe, Papier, Hampf- oder Juteseil bestehenden Kern, der mit Stroh umwickelt und mit einem Überlappungsnähte bildenden Band aus Papier oder Zellulose-Vlies ummantelt ist (DE-A- 36 14 921). Ein anderer einstückiger Kranz besteht aus Wellpappe, die im feuchten Zustand gewickelt, vorgeformt und in Ringform gebracht werden muß (DE-OS 36 09 406). Noch andere nicht-segmentierte Kernkörper für Gebinde bestehen aus Mischungen aus Stroh, Zellstoff, Torf und Kork (DE-B- 1 060 179, DE-C- 652 394, DE-U- 86 13 608.9). Bekannte Unterlagen aus ein Vollmaterial bildenden geschäumten Kunststoffen müssen in einer Maschinenform geformt oder gepreßt und einem Aushärtungs- oder Verfestigungsprozeß unterzogen werden (DE-B- 1 174 562, DE-U- 73 07 367).

Der Erfindung liegt die Aufgabe zugrunde, einen stabilen ringförmigen Kernkörper für Schmuck-, Pflanzen-, Trauergebinde od.dgl. zu schaffen, der mit spitzförmigen Gegenständen leicht besteckbar ist, einfach baut und verfahrenstechnisch in großer Stückzahl einfach sowie kostengünstig herstellbar ist.

Die Aufgabe wird in Verbindung mit den Merkmalen des eingangs genannten Kernkörpers dadurch gelöst, daß sämtliche Segmentkörper Schnitteile eines geraden zylindrischen, aus Wellmaterial wie vorzugsweise Wellpappe bestehenden, zum Bestecken mit spitzförmigen Gegenständen wie Nadeln, Stengeln, Drähten od.dgl. geeigneten Materialstranges sind, wobei die Segmentkörper im Horizontalschnitt des Ring-Kernkörpers trapezförmige Gestalt aufweisen und wobei die Schnittflächen der Segmentkörper glatte Verbundflächen sind, die mittels eines ein Haft-, Leim- oder Klebemittel umfassenden Verbundmaterials im Stumpfstoß fest miteinander verbunden sind. Mit dem Aufbau des Ring-Kernkörpers aus einer Vielzahl von Schnitteilen des Materialstranges ist eine besonders schnelle, einfache und kostensparende Fertigung erreicht. Da die Segmentkörper Schnitteile eines geraden zylindrischen, relativ langen Materialstranges sind, entstammen sie in großer Zahl ein und demselben Materialstrang. Der Schnittstrang ist vorzugsweise als Rundstrang mit einer abgeflachten Seite ausgebildet. Statt eines bogenförmigen und abgeflachten Querschnitts können z.B. ovale oder rechteckförmige Querschnitte vorgesehen sein. Die Schnitteile sind derart geschnitten, daß sie im Horizontalschnitt des Ring-Kernkörpers trapezförmige Gestalt aufweisen. Damit lassen sich auf bequeme Weise durch einen Winkelzug bestimmte Krümmungsabschnitte und ggf. gerade Abschnitte des Ring-Kernkörpers ausbilden. Der Strang besteht aus Wellmaterial, das so weich und elastisch ist und damit eine innere Verformbarkeit mit der Eigenschaft aufweist, daß spitzförmige Gegenstände wie Nadeln, Stengel, Drähte od.dgl. leicht einsteckbar und entnehmbar sind, wobei sie dennoch von dem Material unter festen Halt aufgenommen werden. So lassen sich zu befestigende Teile wie Blumen, Äste, Stengel, Zweige, Drähte, Fäden, Netze, Matten, Dekorationsmittel, Werbeankündigungen u.v.m. unmittelbar und/oder mittelbar mit z.B. Einfach- oder Doppelnadeln, letztere z.B. in U-Form als Haftnadeln (Haften) auf den Strangschnitteilen des Kernkörpers festsetzen, anordnen und/oder gruppieren. Als Wellenmaterial ist erfindungsgemäß insbesondere Wellpappe vorgesehen. Wellpappe ist ein gut verrottbares, organisch abbaubares, recyclingfähiges und damit umweltfreundliches Kernkörper-Material. Die Schnitteile werden durch Absägen oder Abtrennen quer zum Materialstrang oder durch Aussägen von Keilen aus dem Materialstrang schnell und einfach gewonnen. Dabei entstehen glatte Schnittflächen, die innerhalb des Kernkörpers stumpf gegeneinander liegen. Die Stumpfstoß-Schnittflächen benachbarter Schnitteile sind auf einfache Weise mittels eines Haft-, Leim- oder Klebemittels aneinander gefügt. Form und Größe der Schnitteile sind durch die Schnittflächen und durch die Längskontur des geraden Materialstranges bestimmt. Da der Kernkörper aus einer Vielzahl von Schnitteilen zusammengesetzt ist, bilden diese im Verhältnis zur Form und Größe des Kernkörpers nur kurzstückige Elemente, die insoweit eine von der Gesamtgestalt des Kernkörpers unabhängige Form aufweisen und - nur in Abhängigkeit von den Orientierungen der Schnittflächen - beliebig zu Ring-Kernkörpern zusammengesetzt sind.

Mit Segmentkörper-Schnitteilen eines Hohl- oder Rohrstranges erhält man einen gewichtsmäßig leichtbauenden und Material sparenden Kernkörper, wobei die glatten Schnittflächen durch Quer-Schnitte der Hohlstrang- oder Rohrwandung gebildet sind.

Zur Verbindung zweier benachbarter Kernkörper-Schnitteile kann es bereits ausreichen, daß die Außennaht oder -fuge der Stumpfstoßflächen außen an dem Kernkörper mit einer Leimraupe od.dgl. umgeben wird. Auch kann die Außennaht oder -fuge mit einem Haftmittel in Form eines Klebebandes umwickelt sein. Besonders zweckmäßig ist es aber, daß ein Leim- oder Klebemittel zwischen die stumpf gegeneinanderliegenden Verbundflächen gefügt ist. Eine besondere Maßnahme besteht darin, daß zwischen die stumpf gegeneinanderliegenden Verbundflächen eine aus dem Leim- oder Klebemittel gebildete Schicht gefügt ist, die im Querschnitt des Kernkörpers eine Scheibe hoher Druckfestigkeit bildet, wobei die Aushärtungsfestigkeit des Leim- oder Klebemittels im Verhältnis zur Materialsteifigkeit oder -festigkeit der Segmentkörper relativ groß ist. Man erhält mit den Leim- oder Klebescheiben zwischen den Stumpfstoß-Schnittflächen eine Art Skelettstruktur, die dem Kernkörper eine außerordentlich hohe Druckfestigkeit verleiht, obwohl er mit den Strang-Schnitteilen aus einem relativ weichen, zum Bestecken mit Nadeln od.dgl. geeigneten Material gebildet ist.

Ein Kreisring-Kernkörper, ein sogenannter Römer, ist erfindungsgemäß mit gleich großen Schnitteilen gebildet, die unter entgegengesetzt gleichen Winkeln mit deckungsgleichen Verbundflächen geschnitten sind. Die Abmaße des Römers sind durch den Querschnitt, das Maß der Schnitt-Schrägung der Segmentkörper und deren Länge bestimmt. Je größer die Schnittschrägung der Verbundfläche ist, desto kleiner ist der Durchmesser des Ringes. Ein Kernkörperkranz (Römer) umfaßt insbesondere 15 bis 30 Segmentkörper.

Eine besonders vorteilhafte Ausbildung des Kernkörpers besteht darin, daß die Segmentkörper Schnitteile eines Materialstranges sind, der aus einer Schichtung mehrerer miteinander verbundener Lagen gebildet ist. Solche Lagen bestehen zweckmäßig aus einem einseitig gedeckten Wellenmaterial, mit dem der Strang bzw. die Schnitteile gewichtsmäßig leicht, relativ weich, dennoch stabil und besonders gut mit Nadeln od.dgl. besteckbar sind. Hinsichtlich einer besonders einfachen und kostengünstigen Herstellung eines Schichten oder Lagen umfassenden Materialstranges ist dieser aus einer Materialbahn zu einem Wickel aufgerollt. Dabei ist es besonders zweckmäßig, daß die Schnitteile aus einem Wellenmaterial-Wickelstrang bestehen, der aus einseitig gedecktem Wellenmaterial versatzfrei und damit nahtlos gewickelt ist. Vorzugsweise sind die Wellen an der deckfreien Seite des Wellmaterials mit der benachbarten Decklage mittels eines aushärtenden Materials wie Leim oder Klebe verbunden. So ist innerhalb des Wickels eine zusätzliche gitterartige Aussteifung vorgesehen, die dem Strang bzw. den Schnitteilen eine besonders gute Druckfestigkeit verleiht. Die äußere, überlappungsfreie Decke des Wickelstranges gewährleistet für die aus dem Strang gewonnenen Schnitteile eine sehr gute Dichtung gegenüber Feuchtigkeit. Damit sind besonders gute Lagerfähigkeit und große Haltbarkeit des Kernkörpers gewährleistet.

Der Kernkörper kann mit einer geschlossenen Ummantelung oder Mantelschicht aus einem Stabilisierungsmaterial mit elastischen oder spröden sowie feuchtigkeitsabweisenden Eigenschaften versehen sein. Als Mantelmaterial, das insbesondere an der Außen- oder Oberfläche geringfügig in das Material des Kernkörpers eingedrungen sein kann, eignen sich Stoffe oder Stoffkomponenten wie Leim, Kollagen, Klebemittel, Stärke, Harz, Paraffin, Stearin und/oder Vinylacetate. Der Mantel dient einer Veredelung der Kernkörperoberfläche und ist so beschaffen, daß er leicht von Nadeln od.dgl. durchdringbar ist. Auch kann er zugleich ein den Kernkörper umgebendes Verbundmaterial bilden, mit dem die Schnitteile im Stumpfstoß gegeneinander fest miteinander verbunden sind. Die Ummantelung ist insbesondere durch Umspülen des Kernkörpers mit einem flüssigen Mantelmaterial gebildet.

Besondere wasserabweisende und/oder stabile Eigenschaften eines Kernkörpers sind dadurch erreicht, daß er mit einer dünnwandigen homogenen (nahtlosen) Ummantelung versehen ist, die aus einem Faserstoff wie Vlies, Papier, Kreppapier, Zellstoff, Textilstoff oder einem Mischgefüge solcher Stoffe besteht, wobei die Faserstruktur mit mindestens einem Binde-/Dichtmittel durchsetzt und/oder beschichtet ist. Als Binde-/Dichtmittel eignen sich Stoffe wie Kollagen, Lignin, Stärke, Harz, Latex, vorzugsweise Natur-Latex, Paraffin, Stearin und/oder Vinylacetat-Dispersionen. Eine solche Ummantelung kann auch als äußeres Verbundmaterial zur festen Verbindung der im Stumpfstoß gegeneinander liegenden Schnitteile vorgesehen sein. Der Verbund der Faserstruktur mit Harz gewährleistet eine besondere Stabilisierung der Ummantelung. Die Außenhaut des Kernkörpers ist mit der Ummantelung auf den jeweils gewünschten Einsatzzweck abgestimmt. Zudem ist auf einfache Weise eine gewünschte Andrahtungs- oder Besteckungseigenschaft der Kernkörper- Außenfläche erreicht, und das ästhetische Erscheinungsbild des Kernkörpers kann nach Wunsch vorgesehen werden.

Je nach Einsatzzweck können sämtliche Bestandteile des Kernkörpers, nämlich die Schnitteile für sich und ggf. ein Mantel mit mindestens einem elastische oder spröde sowie wasserabweisende Materialeigenschaften aufweisenden Stabilisierungsmittel wie Leim, z.B. Kollagen, Lignin, Stärke, Harz, Latex, Paraffin, Stearin und/oder Vinylacetat getränkt und/oder benetzt sein, so daß eine gewünschte Festigkeit, feuchtigkeitsabweisende Eigenschaft oder Struktur erreicht ist. Insbesondere wird als Stabilisierungsmittel ein Tauch- oder Sprühmittelverwendet. Die Teile können aber ebenso gut mit einem flüssigen Stabilisierungsmittel umspült werden.

Weitere Vorteile und Ausführungsformen der Erfindung gehen aus der folgenden Beschreibung der in der schematischen Zeichnung dargestellten Ausführungsbeispiele hervor. Es zeigen
- Fig. 1: einen erfindungsgemäßen Ringform-Kernkörper in Draufsicht,
- Fig.2: einen erfindungsgemäßen Kernkörper bildende zylindrische Segmentkörper,
- Fig. 3: einen in Segmentkörper geschnittenen Strangkörpern in Schnittbilddarstellung,
- Fig. 4A u. 4B: aus Wellpappewickel bestehende Segmentkörper-Materialstränge und
- Fig. 5A u. 5B: erfindungsgemäße Ringform-Kernkörper mit zwischen Stumpfstoß-Verbundflächen eingefügten Stabilisierungsscheiben aus ausgehärteten Leim.

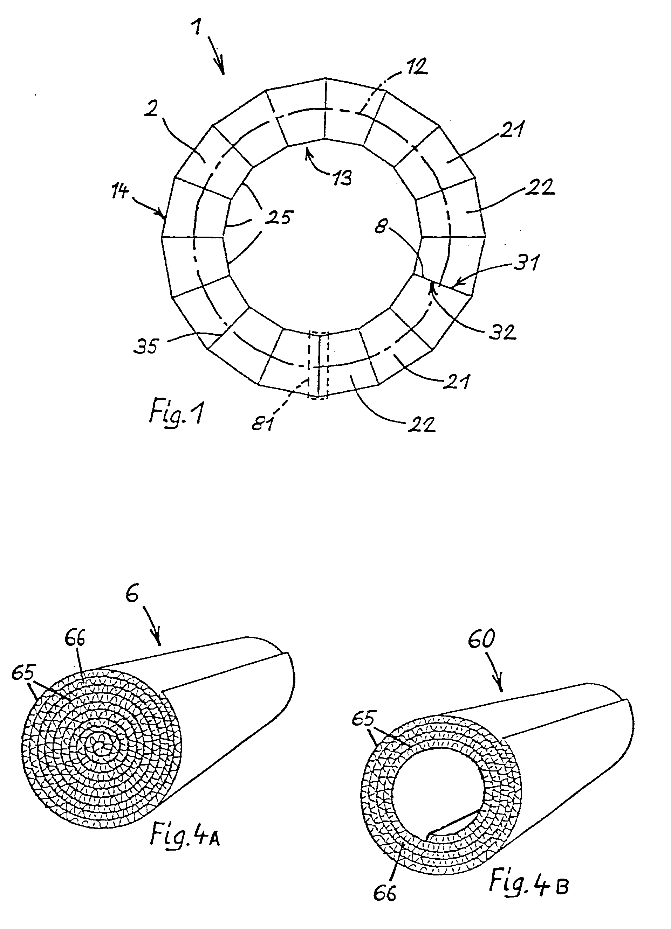

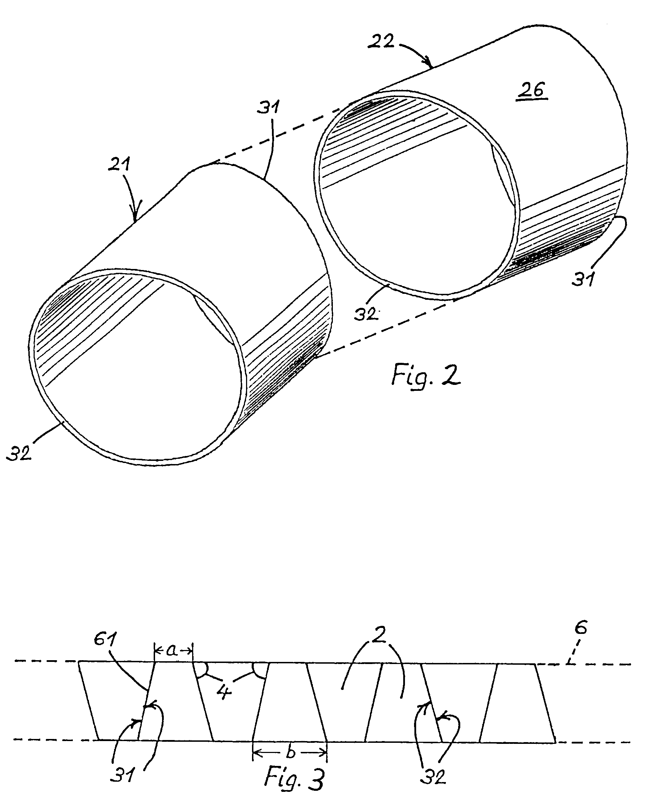

Wie aus Fig. 1 ersichtlich, sind sechzehn Segmentkörper 2 gleicher Gestalt und Größe zu einem Kernkörper 1 in Form eines geschlossenen Ringes oder Kranzes (Römers) zusammengefügt. Die Segmentkörper zeigen in Draufsicht und in Horizontalschnitten des Kernkörpers gleiche symmetrisch-trapezförmige Gestalt.

Die Segmentkörper 2 gemäß Fig. 1 sind Schnitteile eines geraden zylindrischen Materialstranges 6, wie dies aus Fig. 3 ersichtlich ist. So verläuft die Innenfläche 13 des Ring-Kernkörpers entlang einem regelmäßigen, unter gleichen Winkeln gebrochenen Polygonzug 25, und auch die Außenfläche 14 des Ring-Kernkörpers 1 liegt entlang einem regelmäßigen Ring-Polygonzug mit gleichen geraden Umfangsabschnitten. Der Ring-Kernkörper besteht also aus einem segmentierten Vieleckkörper, wobei die Schnitteile im Verhältnis zum Ringumfang kurzstückige, von der Kreisringform unabhängige, am Innen- und Außenumfang geradflächige Körperstücke sind.

Die Segmentkörper 2 weisen glatte stumpfe Schnittflächen 31, 32 auf, die durch Schnitte quer zur Längserstreckung des Materialstranges gebildet sind (Fig. 3). Diese Schnittflächen bilden Verbundflächen, mit denen die Schnitteil-Segmentkörper im Stumpfstoß miteinander verbunden sind. Zwischen die stumpf gegeneinander liegenden Verbundflächen, die sich im Ring-Kernkörper 1 radial erstrecken und senkrecht zu einer strichpunktiert dargestellten Kreisring-Mittellinie 12 stehen, ist ein Leim- oder Klebemittel 8 gefügt. Die Segmentkörper 2 können auch durch eine in den Figuren nicht dargestellte, ein Haft- oder Klebemittel umfassende Mantelschicht des Kernkörpers fest miteinander verbunden sein. Eine noch andere Gestaltung besteht darin, daß benachbarte Schnitteil-Segmentkörper 21 und 22 entlang der äußeren Fuge 35 des Stumpfstoßes mit einem Klebeband oder -streifen 81 umwickelt sind.

In Fig. 2 sind zwei benachbarte Segmentkörper 21 und 22 dargestellt, die Schnitteile eines nicht dargestellten Kreiszylinder-Rohrstranges sind. Die Segmentkörper sind durch gegenwinklige, durchgehende Schrägschnitte aus dem Rohrstrang gebildet, wobei die Wandschnittflächen des Rohrstranges die zum Aneinanderfügen bestimmten Stumpfstoß-Verbundflächen 31 und 32 bilden. Die Wandstärke des Rohrstranges bzw. der Schnitteile ist im Verhältnis zum Strangdurchmesser klein.

Mit Schnitteilen, wie sie in Fig. 2 dargestellt sind, können Ring-Kernkörper mit gekrümmten und ggf. geraden Abschnitten gebildet werden.

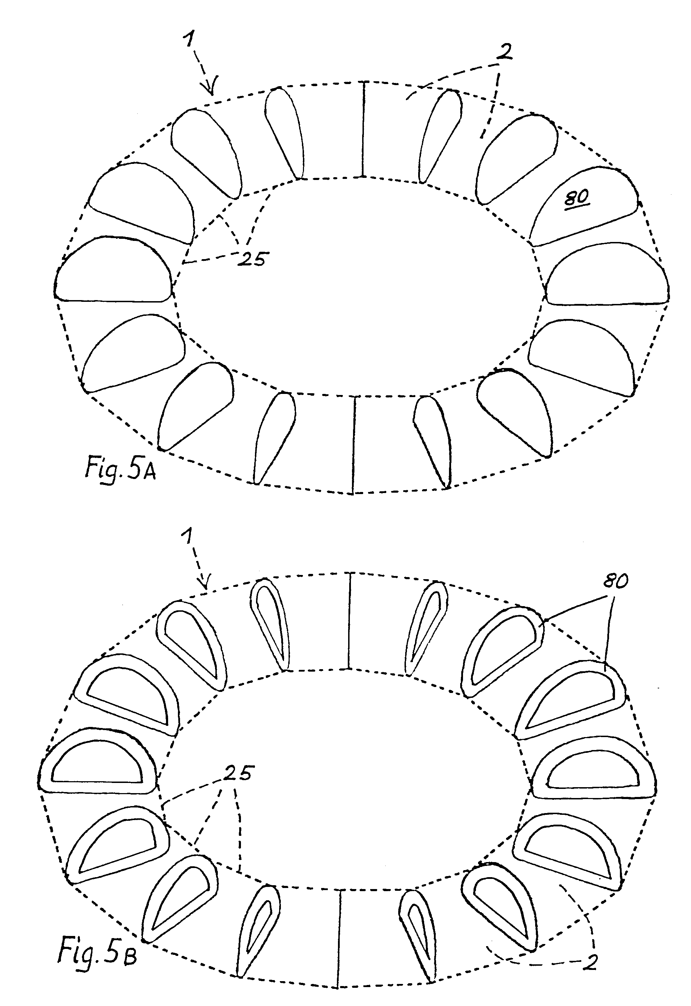

Die Materialstränge bzw. die Schnitteil-Segmentkörper können die verschiedensten Querschnittsformen aufweisen. Besonders vorteilhaft ist die Ausbildung einer aus Fig. 5A und 5B ersichtlichen bogenförmigen und abgeflachten Querschnittsform. So umfaßt der Kernkörper eine flache Auflageseite und eine zum Bestecken mit Schmuckteilen gewölbte Seite.

In Fig. 3 ist anhand eines schematischen Schnittbildes die Ausbildung von Schnitteil-Segmentkörpern aus einem geraden Vollmaterial- oder Hohlstrang dargestellt.

Man erkennt aus Fig. 3, daß ein gerader Strang 6 mit durchgehenden glatten Schnitten 61 in Segmentkörper 2 geschnitten ist, die im Horizontalschnitt symmetrische Trapezform aufweisen. Die Schnitteil-Segmentkörper 2 werden dann mit ihren glatten stumpfen Verbundflächen 31 und 32 zu einem geschlossenen Ring gemäß Fig. 1 oder 5A/5B zusammengefügt. Zum Schneiden kann der langgestreckte Herstellungsstrang 6 gleichmäßig quer zu einer pendelnden Säge geführt werden, so daß man auf einfache Weise Segmentkörper 2 gleicher Größe und Gestalt erhält. Die Zahl der Schnittflächenwinkel 4 ist durch die Vorschubgeschwindigkeit des Stranges 6 und die Pendelgeschwindigkeit der Säge bestimmt. Z.B. werden Segmentkörper mit einem Schnittwinkel 4 von ca. 80°, einer kurzen Grundlinie a = 25 mm, einer langen Grundlinie b = 65 mm und mit einer Querschnittsfläche von ca. 8 000 mm² oder einem Durchmesser von ca. 90 mm geschnitten.

Bei einem gut verrottbaren, organisch abbaubaren und recyclingfähigen Kernkörper 1 bestehen der Strang bzw. die Segmentkörper 2 aus gedeckten Wellpappelagen. Aus dem Wellpappestrang lassen sich die Schnitteil-Segmentkörper besonders einfach schneiden.

Gemäß einer besonders vorteilhaften Ausführungsform der Erfindung sind die Segmentkörper Schnitteile eines Wellpappewickel-Stranges (Fig. 4). Diesen erhält man dadurch, daß eine einseitig gedeckte Wellpappebahn 66 mit außen gerollter Decke 65 versatzfrei aufgerollt wird, wobei die Wellen mit der Wickelachse fluchten. Die Endbereiche der Lagen können mit Leim, Klebeband oder Heftmitteln aneinander befestigt werden. Besonders zweckmäßig ist es, die Wellen an der deckfreien Seite der Wellpappebahn beim Wickelvorgang mit Klebepunkten oder Klebelinien zu versehen. Dadurch entsteht nach Aushärten des Klebers ein sehr stabiles und damit druckfestes inneres Wickelgefüge. Der Wellpappewickel kann einen kreisrunden, aber insbesondere auch einen bogenförmigen und abgeflachten oder einen ovalen Querschnitt aufweisen. Ein Durchmesser des Wellpappewickels beträgt z.B. 100 mm, und der Wickel weist eine Länge von ca. 2 200 mm auf. Aus einem solchen Strang können z.B. 20 bis 40 Segmentkörper geschnitten werden. Der Wellpappestrang kann in Form eines Rohres oder Hohlstranges gewickelt sein, z.B. mit einem Außendurchmesser von 100 mm, einem Innendurchmesser von 60 - 90 mm und einer Länge von 2 200 mm (Fig. 4B).

Anhand von Fig. 5A und 5B ist die Ausbildung vertikaler Stabilisierungsflächen innerhalb eines Kernkörper-Ringes 1 dargestellt. Diese entstehen durch den vollflächigen Auftrag eines Leimes 8 an den Schnitt-Verbundflächen 31, 32 der Segmentkörper 2. So sind zwischen den Verbundflächen im Querschnitt des Ringes 1 feste Scheiben 80 mit einer Steifigkeit ausgebildet, die durch den Aushärtungsgrad des Leims bestimmt ist. Die Dicke einer Scheibe richtet sich nach der Menge des Leimauftrags. Der Leim kann in Form eines Films aufgetragen werden, so daß sehr dünnwandige Scheiben entstehen, die dennoch eine große Steifigkeit aufweisen. Auch hängt die Menge des Leimauftrags von dem für den Strang bzw. die Segmentkörper verwendeten Material ab. Sehr vorteilhaft ist die Verwendung von Wellpappe als Strangmaterial, da auf den Wellpappe-Schnittverbundflächen nur ein sehr geringer Leimauftrag erforderlich ist. Zudem ist Wellpappe ein umweltfreundlich beseitigbares, sehr gut schnittfähiges und kostengünstig zur Verfügung stehendes Material, mit dem der Strang in Form eines Wickels einfach herstellbar ist. Das an sich weiche Wellpappematerial gewährleistet eine gute Besteckbarkeit des Kernkörpers mit Nadeln od.dgl.. Da die weichen Wellpappe-Segmentkörper 2 mit den im Verhältnis zur Festigkeit von Wellpappe harten Scheiben 80 zusammengefügt sind, ist ein Skelett ausgebildet, das dem Kernkörper 1 Steifigkeit, große Stabilität und Druckfestigkeit verleiht. Fig. 5A zeigt vollflächige Scheiben 80 eines Vollmaterial-Kernkörpers 1, während in Fig. 5B der Gitteraufbau eines Hohlkranzes 1 mit Ringscheiben 80 dargestellt ist.

## Patentansprüche

1. Kernkörper (1) in Form eines Ringes für Schmuck-, Pflanzen-, Trauergebinde od. dgl., der im Verhältnis zur Form und Grösse des Kernkörpers (1) kurzstückige Segmentkörper (2) aufweist, die an in Querschnitten des Kernkörpers (1) liegenden Stirnseiten aneinander gefügt sind, **dadurch gekennzeichnet,** dass sämtliche Segmentkörper (2) Schnitteile (21, 22, 23) eines geraden zylindrischen, aus Wellmaterial wie vorzugsweise Wellpappe (65, 66) bestehenden, zum Bestecken mit spitzförmigen Gegenständen wie Nadeln, Stengeln, Drähten od. dgl. geeigneten Materialstranges (6, 60) sind, wobei die Segmentkörper (2) im Horizontalschnitt des Ring-Kernkörpers (1) trapezförmige Gestalt aufweisen und wobei die Schnittflächen der Segmentkörper (2) glatte Verbundflächen (31, 32, 33) sind, die mittels eines ein Haft-, Leim- oder Klebemittel umfassenden Verbundmaterials (8) im Stumpfstoss fest miteinander verbunden sind.

2. Kernkörper nach Anspruch 1, **dadurch gekennzeichnet,** daß die Segmentkörper (21, 22, 23) Schnitteile eines Hohl- oder Rohrstranges (6, 60) sind.

3. Kernkörper nach Anspruch 1 oder 2, **dadurch gekennzeichnet,** daß das Leim- oder Klebemittel zwischen die stumpf gegeneinander liegenden Verbundflächen (31, 32) gefügt ist.

4. Kernkörper nach Anspruch 3, **dadurch gekennzeichnet,** daß die Aushärtungsfestigkeit des Leim- oder Klebemittels (8) im Verhältnis zur Materialsteifigkeit oder -festigkeit der Segmentkörper (21, 22) groß ist.

5. Kernkörper nach Anspruch 4, **dadurch gekennzeichnet,** daß zwischen die stumpf gegeneinander liegenden Verbundflächen (31, 32) eine aus dem Leim- oder Klebemittel gebildete Schicht gefügt ist, die quer zur Erstreckung des Kernkörpers (1) eine Schiebe (80) mit gegenüber der Druckfestigkeit des Segmentkörper (2) hoher Druckfestigkeit bildet.

6. Kernkörper nach einem der Ansprüche 1 bis 5, **dadurch gekennzeichnet,** daß die Segmentkörper (21, 22) gleich groß sind und die Schnittflächen (31, 32) eines Segmentkörpers unter entgegengesetzt gleichen Winkeln (4) geschnitten sind.

7. Kernkörper nach einem der Ansprüche 1 bis 6, **dadurch gekennzeichnet,** daß die Segmentkörper (21, 22) Schnitteile eines Stranges sind, der aus einer Horizontalschichtung mehrerer Lagen eines einseitig gedeckten Wellmaterials oder aus einem Wickel (6, 60) eines solchen Wellmaterials gebildet ist.

8. Kernkörper nach Anspruch 7, **dadurch gekennzeichnet,** daß die Segmentkörper (21, 22) Schnitteile eines Wellmaterial-Wickelstranges (6, 60) sind, der aus einseitig gedecktem Wellmaterial gewickelt ist, wobei die Wellen an der deckfreien Seite des Wellmaterials mit der benachbarten Decklage mittels eines aushärtenden Materials wie Leim oder Kleber verbunden sind.

9. Kernkörper nach einem der Ansprüche 1 bis 8, **dadurch gekennzeichnet,** daß der Kernkörper (1) eine Mantelschicht aufweist, die aus einem elastische oder spröde sowie wasserabweisende Eigenschaften aufweisenden Material besteht.

10. Kernkörper nach einem der Ansprüche 1 bis 9, **dadurch gekennzeichnet,** daß der Kernkörper (1) mit einer dünnwandigen Ummantelung versehen ist, die aus einem Faserstoff wie Vlies, Papier, Kreppapier, Zellstoff, Textilstoff oder einem Mischgefüge solcher Stoffe besteht, wobei die Ummartelung mit mindestens einem Binde-/Dichtmittel nahtlos und homogen durchsetzt und/oder beschichtet ist.

11. Kernkörper nach einem der Ansprüche 1 bis 10, **dadurch gekennzeichnet,** daß sämtliche Bestandteile des Kernkörpers (1) mit mindestens einem elastische oder spröde sowie wasserabweisende Materialeigenschaften aufweisenden Stabilisierungsmittel getränkt und/oder benetzt sind.

## Claims

1. Core (1) in the form of a ring for decorative, plant, funeral or the like wreaths, comprising, compared to the shape and dimensions of the core (1), short segments (2) which are joined together at end faces lying in cross sections of the core (1), characterised in that all of the segments (2) are sections (21, 22, 23) cut from a straight cylindrical web of material (6, 60) consisting of a corrugated material, such as preferably corrugated cardboard (65, 66), suitable for the insertion of pointed objects such as pins, stalks, wires or the like, the segments (2) having a trapezoidal shape in the horizontal section of the annular core (1) and the cut edges of the segments (2) being smooth connecting surfaces (31, 32, 33) which are firmly butt-jointed together by means of a composite material (8) including a bonding agent, a glue or an adhesive.

2. Core according to claim 1, characterised in that the segments (21, 22, 23) are sections cut from a hollow or tubular body (6, 60).

3. Core according to claim 1 or claim 2, characterised in that the glue or adhesive is added between the abutting connecting surfaces (31, 32).

4. Core according to claim 3, characterised in that the hardening strength of the glue or adhesive (8) is high compared to the material rigidity or strength of the segments (21, 22).

5. Core according to claim 4, characterised in that a layer formed of glue or adhesive is added between the abutting connecting surfaces (31, 32) and forms a disc (80) of high compressive strength compared to the compressive strength of the segments (2) transversely to the extent of the core (1).

6. Core according to one of claims 1 to 5, characterised in that the segments (21, 22) are of identical size and the cut edges (31, 32) of a segment are cut with opposing identical angles (4).

7. Core according to one of claims 1 to 6, characterised in that the segments (21, 22) are sections cut from a web which is formed of a horizontal arrangement of several layers of a corrugated material covered on one side or of a package (6, 60) of a corrugated material of this kind.

8. Core according to claim 7, characterised in that the segments (21, 22) are sections cut from a wound web (6, 60) of corrugated material wound from corrugated material covered on one side, the corrugations on the uncovered side of the corrugated material being connected to the adjacent covering layer by means of a hardening material such as glue or adhesive.

9. Core according to one of claims 1 to 8, characterised in that the core (1) has an outer layer which consists of a flexible or brittle material having waterproofing properties.

10. Core according to one of claims 1 to 9, characterised in that the core (1) is provided with a thin-walled sheath which consists of a fibrous material such as non-woven fabric, paper, crepe paper, cellulose, textile fabric or a mixed structure of such materials, the sheath being seamlessly and homogeneously traversed by and/or coated with at least one binding/sealing agent.

11. Core according to one of claims 1 to 10, characterised in that all of the constituents of the core (1) are impregnated and/or wetted with at least one flexible or brittle stabilising agent having waterproofing material properties.

## Revendications

1. Noyau (1) sous forme annulaire pour couronne décorative, végétale, de deuil ou analogues, qui présente des segments (2), courts par rapport à la forme et à la taille du noyau (1), segments qui sont joints les uns aux autres au niveau des surfaces frontales se trouvant dans les sections transversales du noyau (1), caractérisé en ce que tous les segments (2) sont des tranches (21, 22, 23) d'un rouleau de matériau (6, 60), cylindrique droit, constitué d'un matériau ondulé, comme par exemple un carton ondulé (65, 66) et pouvant être garni d'objets pointus tels que des aiguilles, des tiges, des fils métalliques ou analogues, les segments (2) ayant, quand on coupe le noyau annulaire (1) dans un plan horizontal, une forme trapézoïdale, les interfaces des segments (2) étant des surfaces de liaison lisses (31, 32, 33), qui sont liées à demeure les unes aux autres, par assemblage par soudure en bout, à l'aide d'un matériau d'assemblage (8) comportant un agglutinant, une colle ou un adhésif.

2. Noyau selon la revendication 1, caractérisé en ce que les segments (21, 22, 23) sont les tranches d'un rouleau creux ou tubulaire (6, 60).

3. Noyau selon la revendication 1 ou 2, caractérisé en ce que la colle ou le liant est inséré entre les surfaces de liaison (31, 32), en aboutement l'une par rapport à l'autre.

4. Noyau selon la revendication 3, caractérisé en ce que la résistance au durcissement de la colle ou du liant (8) est importante par rapport à la rigidité ou à la résistance mécanique du matériau des segments (21, 22).

5. Noyau selon la revendication 4, caractérisé en ce que, entre les surfaces de liaison (31, 32) en aboutement l'une par rapport à l'autre, on a inséré une couche formée de la colle ou de l'adhésif, et qui, perpendiculairement à l'étendue du noyau (1), forme un disque (80), ayant une résistance à la compression élevée par rapport à la résistance à la compression des segments (2).

6. Noyau selon l'une des revendications 1 à 5, caractérisé en ce que les segments (21, 22) ont une taille identique, et que les interfaces (31, 32) d'un segment sont découpées selon des angles égaux et opposés (4).

7. Noyau selon l'une des revendications 1 à 6, caractérisé en ce que les segments (21, 22) sont les tranches d'un rouleau, lequel est formé à partir d'un empilement horizontal de plusieurs couches d'un matériau ondulé couvert sur un côté, ou d'une bobine (6, 60) d'un tel matériau ondulé.

8. Noyau selon la revendication 7, caractérisé en ce que les segments (21, 22) sont des tranches d'un rouleau d'un matériau ondulé en enroulement (6, 60), lequel est enroulé à partir d'un matériau ondulé couvert sur un côté, les ondulations, sur le côté non couvert du matériau ondulé, étant assemblées à la couche de couverture voisine à l'aide d'un matériau durcissable, tel qu'une colle ou un adhésif.

9. Noyau selon l'une des revendications 1 à 8, caractérisé en ce que le noyau (1) comporte une couche de gainage, qui est constituée d'un matériau élastique ou fragile, et présentant des propriétés hydrofuges.

10. Noyau selon l'une des revendications 1 à 9, caractérisé en ce que le noyau (1) est pourvu d'une enveloppe à faible épaisseur de paroi, qui est constituée d'un matériau fibreux tel qu'un non-tissé, du papier, du papier crêpé, de la cellulose, un matériau textile ou une structure constituée d'un mélange de ces matériaux, l'enveloppe étant chargée et/ou revêtue, sans soudure et d'une manière homogène, d'au moins un liant ou d'un matériau d'étanchéité.

11. Noyau selon l'une des revendications 1 à 10, caractérisé en ce que tous les constituants du noyau (1) sont imprégnés et/ou mouillés par au moins un agent stabilisant, élastique ou fragile, et présentant des propriétés hydrofuges.
